# DEMANDE DE BREVET EUROPEEN

(11) **EP 1 271 739 A1**
(43) Date de publication de la demande: **02.01.2003**
(21) Numéro de dépôt: 02291471.7
(22) Date de dépôt: 13.06.2002
(51) Int. Cl.: H02H 7/085

(54) **Calibrage du rapport entre l'intensit- d'un courant et la force de pincement dans un l-ve vitre -lectrique - c-bles tendus par un ressort**

(30) Priorité: 19.06.2001 FR 0108015
(71) Demandeur: ArvinMeritor Light Vehicle Systems-France, 45600 Sully sur Loire (FR)
(72) Inventeur: Le Gallo, Yann, 45100 Orleans (FR)
(74) Mandataire: Le Bras, Hervé

(57) **Abrégé**

L'invention concerne un procédé pour calculer le rapport K entre la variation d'intensité du courant alimentant un moteur électrique (2) d'entraînement d'une chaîne cinématique destiné à déplacer un élément (7) par rapport à un support, et la variation de la force appliquée sur ledit élément, ladite chaîne cinématique comportant des câbles (5) maintenus tendus par au moins un ressort (8a, 8b) ayant une raideur k connue, caractérisé par le fait qu'on mesure la variation d'intensité ΔI₂ du moteur au cours de la phase de compression (ph2) du ressort (8a) après le démarrage du moteur (2), l'élément (7) étant alors immobile par rapport au support, on détermine l'élongation correspondante Δz dudit ressort (8a) et on calcule le rapport K par la formule K = ΔI₂/(kΔz).

## Description

L'invention concerne un procédé pour mesurer le rapport K entre, d'une part, la variation d'une grandeur caractéristique d'un moteur électrique d'entraînement d'une chaîne cinématique destinée à déplacer un élément par rapport à un support, et, d'autre part, la variation de la force appliquée par ledit moteur sur ledit élément en mouvement, ladite chaîne cinématique comportant des câbles maintenus tendus par au moins un ressort ayant une raideur k.

L'élément peut être, par exemple, une vitre de porte de véhicule actionnée par un lève-vitre à câbles ou un panneau de toit ouvrant de véhicule entraîné par des câbles sous gaines. Les câbles transitent par des gaines qui prennent appui, par l'intermédiaire de ressorts à boudin, sur des supports fixes, afin de maintenir sous tension les câbles en vue de rattraper les jeux éventuels et d'éviter des bruits intempestifs.

Lorsque l'élément arrive en butée dans une position extrême, d'ouverture totale ou de fermeture totale, il est nécessaire de couper l'alimentation électrique du moteur pour éviter des surchauffes. La coupure de l'alimentation électrique est habituellement réalisée de manière automatique lorsque le courant atteint une intensité maximum prédéterminée, soit au moyen de rupteurs thermiques, soit au moyen d'un logiciel de commande du moteur en fonction de la mesure de l'intensité de courant fournie par un capteur de courant. Cette intensité maximum définit par le fait même la force F appliquée par l'élément mobile sur le support en fin de course, le rapport entre cette intensité maximum et la force F étant le coefficient K. Le même processus d'arrêt du moteur est généralement employé lorsqu'un obstacle se présente dans le trajet de l'élément mobile.

Mais le coefficient K dépend d'un grand nombre de facteurs, notamment de la température et du rendement de la chaîne cinématique. Typiquement, le coefficient K décroît avec l'augmentation de la température ambiante et croît avec la diminution de la température ambiante. Comme dans les systèmes actuels, l'intensité maximum permise entraîne l'arrêt du moteur, la force appliquée par l'élément mobile sur la butée ou l'obstacle varie en fonction inverse du coefficient K. Elle est ainsi plus grande, lorsque la température ambiante est élevée, que lorsque la température ambiante est faible. En outre, le coefficient K dépend du rendement de la chaîne cinématique qui, lui aussi, varie avec l'âge des composants. On constate ainsi des dispersions notables dans le comportement des dispositifs d'anti-pincement.

Le but de l'invention est de proposer un procédé pour calculer le coefficient K à chaque démarrage du moteur d'entraînement, ce coefficient pouvant ensuite être utilisé, par exemple, pour calculer l'intensité maximum d'arrêt du moteur en fonction d'une force prédéterminée.

Ce but est réalisé selon l'invention par le fait qu'on mesure la variation de la grandeur caractéristique du moteur au cours de la phase de compression d'un ressort, après le démarrage du moteur, l'élément étant alors immobile, on détermine la force correspondante appliquée par ledit ressort sur ledit élément, et on calcule la valeur K entre la variation de la grandeur caractéristique dudit moteur et la force appliquée par le ressort sur ledit élément.

Avantageusement la grandeur caractéristique du moteur est l'intensité du courant alimentant ce moteur. On mesure la variation d'intensité entre une intensité minimale et la valeur de l'intensité au début de la phase stabilisée.

On détermine la force appliquée par le ressort à partir de son élongation Δz.

Avantageusement, on détermine l'élongation Δz du ressort à partir de la mesure de l'angle de rotation du moteur.

Cette mesure d'angle de rotation du moteur se fait de préférence en comptant les impulsions délivrées par un codeur d'angle monté sur le moteur. On peut relever l'intensité du courant à chaque impulsion délivrée par le codeur d'angle.

Le codeur d'angle est, par exemple, un capteur à effet Hall qui délivre, par exemple, une impulsion à chaque tour du moteur.

La mesure de l'intensité du courant est fournie par un capteur de courant.

Très avantageusement, on calcule la variation élémentaire de courant entre deux impulsions, et on définit la phase de compression du ressort par la plage d'impulsions successives dans laquelle les variations élémentaires de courant sont sensiblement constantes.

En effet, durant la phase de compression du ressort, la force exercée par le ressort est égale à kΔz. Le couple exercé par le moteur durant la phase de compression du ressort est proportionnel à cette force. Il en est de même de la variation ΔI₂ de l'intensité de courant. Dès que l'élément se déplace, la tension du câble tracteur est égale à kΔz et l'intensité du courant est constante. Elle augmentera de nouveau lorsque l'élément rencontrera un obstacle ou une butée selon la loi ΔI = KΔF.

Connaissant, grâce à l'invention, la valeur du coefficient K, il est aisé de définir l'intensité maximum du courant pour arrêter le moteur lorsque ΔF atteint une valeur prédéterminée, lorsque l'élément est en mouvement.

Le procédé s'applique notamment pour le calcul du coefficient K d'un lève-vitre électrique de véhicule.

D'autres avantages et caractéristiques de l'invention ressortiront à la lecture de la description suivante faite à titre d'exemple et en référence aux dessins annexés dans lesquels :
- la figure 1 est un schéma de principe d'un lève-vitre de véhicule, sur lequel le procédé selon l'invention peut s'appliquer ;
- la figure 2 est une vue de principe d'un dispositif mettant en oeuvre l'invention ; et
- la figure 3 est une courbe représentative de l'intensité du courant alimentant le moteur électrique en fonction du temps.

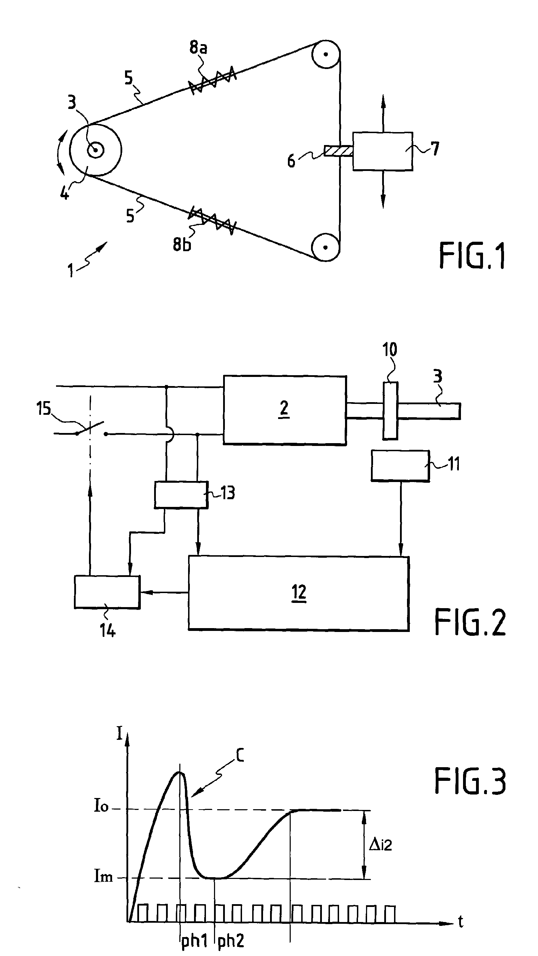

La figure 1 montre un lève-vitre 1 de véhicule qui comporte un moteur électrique 2 dont l'arbre 3 entraîne un tambour 4 d'enroulement de câbles 5 permettant de tracter un curseur 6 le long d'un rail de guidage. Le curseur 6 supporte une vitre 7. Les brins des câbles 5 passent par des gaines non montrées sur les dessins qui prennent appui sur un support fixe avec interposition de ressorts à boudins 8a et 8b, ayant une raideur connue k.

Lors du démarrage du moteur 2, l'un des brins des câbles 5 s'enroule sur le tambour 4, ce qui entraîne après le rattrape du jeu une compression du ressort correspondant, 8a par exemple, sans déplacement du curseur 6 le long de son rail de guidage, puis un déplacement de la vitre 7.

La figure 3 montre la courbe (C) de variation de l'intensité I du courant alimentant le moteur 2 en fonction du temps t.

Cette courbe C présente un pic lors de la mise sous tension, puis l'intensité chute jusqu'à une valeur minimum Im pendant une première phase ph1 durant laquelle il y a un rattrapage de jeu.

Ensuite, l'intensité du courant augmente de manière continue pendant une deuxième phase, ph2. Cette deuxième phase ph2 correspond à la phase de compression du ressort 8a.

Durant cette phase de compression, la vitre 7 est immobile. Ensuite, la vitre 7 se déplace et l'intensité du courant est sensiblement constante et égale à Iₒ. L'intensité augmentera de nouveau lorsque la vitre 7 rencontrera une butée ou un obstacle.

On sait que la force F exercée par un ressort est égale à sa raideur k multipliée par son élongation. Lorsque la tension T exercée par le moteur 2 sur le brin de câble tracteur 5 est suffisante pour "décoller" la vitre 7, le ressort 8a atteint son élongation maximum Δz et l'intensité du courant est Iₒ. Les variations ultérieures du courant ΔI seront égales à un coefficient K multiplié par une force ΔF exercée sur la vitre 7. Ceci se produira notamment lorsque la vitre 7 rencontrera un obstacle. Au moment du "décollage" de la vitre, la force ΔF exercée sur la vitre 7 est égale à kΔz, et l'on a l'équation ΔI₂ = KkΔz, ΔI₂ étant égal à I₀- Iₘ.

La figure 2 montre les dispositifs nécessaires et suffisants pour mettre en oeuvre l'invention.

L'élongation du ressort 8a étant fonction de l'angle de rotation de l'arbre 3 du moteur 2, on mesure de préférence le nombre de tours de rotation du moteur 2 pendant la phase d'élongation ph2. A cet effet, l'arbre 3 du moteur 2 est équipé d'un anneau magnétique bipolaire 10, et le moteur 2 est équipé d'un capteur à effet Hall 11 qui fournit à un circuit électronique 12 une impulsion à chaque tour de rotation du moteur 2.

Il est à noter que le moteur 2 pourrait être équipé de tout autre dispositif de codage d'angle. L'anneau magnétique bipolaire 10 pourrait être, par exemple, remplacé par un disque muni de perforations, et le capteur à effet Hall 11 pourrait être remplacé par une cellule photoélectrique disposée en regard du chemin des perforations et délivrant au circuit électronique 12 un signal à chaque passage d'une perforation.

Un capteur de courant 13, branché sur l'alimentation du moteur 2 délivre au circuit électronique 12 une valeur représentative de l'intensité I du courant.

A chaque impulsion délivrée par le capteur à effet Hall 11, le circuit électronique 12 relève l'intensité fournie par le capteur de courant 13. Le circuit électronique 12 comporte des moyens pour calculer la variation de courant entre deux impulsions consécutives reçues du capteur à effet Hall 11, des moyens pour reconnaître la plage d'impulsions correspondant à la deuxième phase du démarrage ph2, des moyens pour calculer ΔI₂ = I₀- Iₘ, des moyens pour compter le nombre d'impulsions reçues pendant la phase d'élongation du ressort 8a et l'élongation correspondantes Δz, et des moyens pour calculer le facteur K par la formule K = ΔI₂/(kΔz).

La référence 14 désigne un dispositif d'anti-pincement qui reçoit du circuit électronique 12, la valeur du coefficient K et qui est susceptible d'agir sur un interrupteur 15 pour couper le courant d'alimentation du moteur 2, lorsque la mesure de la variation ΔI de l'intensité du courant est supérieure ou égale à KΔF, ΔF étant la force maximum de pincement permise.

Le dispositif d'anti-pincement 15 pourrait naturellement être inclus dans le circuit électronique 12, et ce dernier pourrait faire partie intégrante d'un ordinateur de bord. Les divers moyens du circuit électronique 12, nécessaires pour mettre en oeuvre l'invention peuvent être réalisés sous forme de composants électroniques, ou de routines de logiciel.

## Revendications

1. Procédé pour calculer le rapport K entre une variation d'une grandeur caractéristique d'un moteur électrique (2) d'entraînement d'une chaîne cinématique destiné à déplacer un élément (7) par rapport à un support, et la variation de la force appliquée par ledit moteur sur ledit élément en mouvement, ladite chaîne cinématique comportant des câbles (5) maintenus tendus par au moins un ressort (8a, 8b) ayant une raideur k connue,
**caractérisé par le fait qu'**on mesure la variation de la grandeur caractéristique dudit moteur au cours de la phase de compression (ph2) du ressort (8a, 8b) après le démarrage du moteur (2), l'élément (7) étant alors immobile par rapport au support, on détermine la force correspondante appliquée par ledit ressort sur ledit élément et on calcule le rapport K entre la variation de la grandeur caractéristique dudit moteur et la force appliquée par le ressort sur ledit élément.

2. Procédé selon la revendication 1, **caractérisé par le fait que** la grandeur caractéristique du moteur électrique est l'intensité du courant alimentant ledit moteur.

3. Procédé selon la revendication 2, **caractérisé par le fait que** l'on mesure la variation d'intensité (ΔI₂) entre une valeur minimale (Im) d'intensité et la valeur de l'intensité (Io) au début de la phase stabilisée.

4. Procédé selon la revendication 3, **caractérisé par le fait que** l'on détermine la force (F) correspondante appliquée par le ressort (8a, 8b) à partir de l'élongation (Δz) dudit ressort entre le moment où l'intensité est minimale (Im) et le moment où l'intensité est stabilisée (Io) en appliquant la relation F= kΔz.

5. Procédé selon la revendication 4, **caractérisé par le fait que** l'on détermine l'élongation Δz à partir de la mesure de l'angle rotation du moteur (2).

6. Procédé selon la revendication 5, **caractérisé par le fait que** l'on mesure l'angle de rotation du moteur en comptant le nombre d'impulsions délivrées par un codeur d'angle (10, 11) monté sur le moteur (2).

7. Procédé selon la revendication 6, **caractérisé par le fait que** le codeur d'angle monté sur le moteur (2) est constitué d'au moins un capteur à effet Hall (11).

8. Procédé selon l'une quelconque des revendications 1 à 7, **caractérisé par le fait que** le rapport K est actualisé et mémorisé à chaque démarrage du moteur (2).

9. Procédé selon l'une quelconque des revendications 1 à 8, **caractérisé par le fait que** l'élément est une vitre (7) et la chaîne cinématique est un lève-vitre (1) de véhicule

10. Procédé selon les revendications 3 et 10, **caractérisé par le fait qu'**on réactualise le rapport K à chaque démarrage du moteur et on détermine l'existence d'un pincement de la vitre (7) en calculant la force ΔF appliquée sur la vitre en mouvement par la formule ΔF = ΔI/K, ΔI étant l'écart entre l'intensité du courant et la valeur de l'intensité (Io) au début de la phase stabilisée, et en comparant cette force ΔF à une force limite prédéterminée pour le pincement.
